# EUROPEAN PATENT APPLICATION

(11) **EP 3 896 497 A1**
(43) Date of publication of application: **20.10.2021**
(21) Application number: 21164904.1
(22) Date of filing: 25.03.2021
(51) Int. Cl.: G02B 1/04

(54) **METHOD FOR PRODUCING POLYMERIZABLE COMPOSITION FOR OPTICAL MATERIALS, METHOD FOR PRODUCING TRANSPARENT RESIN, AND METHOD FOR PRODUCING LENS BASE MATERIAL**

(30) Priority: 31.03.2020 JP 2020063438
(71) Applicant: Hoya Lens Thailand Ltd., Pathumthani 12130 (TH)
(72) Inventor: ARAI, Yuko, Tokyo, 1608347 (JP); NAGASAWA, Takumi, Tokyo, 1608347 (JP); IGARI, Masahito, Tokyo, 1608347 (JP)
(74) Representative: Beckmann, Claus

(57) **Abstract**

The present invention provides a novel method for producing a polymerizable composition for optical materials, in which the occurrence of gelation is suppressed even though an organophosphorus compound is used during the preparation of a polymerizable composition for optical materials of a thiourethane-based resin having a high refractive index and suppressed coloration, and the like. A method for producing a polymerizable composition for optical materials, the method including: a step of providing an organophosphorus compound, a polyisocyanate, a first polythiol, and a second polythiol; and a step of mixing the polyisocyanate and the first and second polythiols in the presence of the organophosphorus compound to obtain a polymerizable composition for optical materials, wherein, in the mixing step, the first polythiol and the second polythiol are mixed in advance to prepare a polythiol mixture, and then the polythiol mixture is mixed with the polyisocyanate.

## Description

### BACKGROUND OF THE INVENTION

### Field of the Invention

The present invention relates to a method for producing a polymerizable composition for optical materials, a method for producing a transparent resin, a method for producing a lens base material, and the like.

### Description of the Related Art

Conventionally, it has been known that plastic lenses with a high refractive index can be obtained by allowing polyisocyanate compounds to react with polythiol compounds. These types of plastic materials are rapidly becoming popular for optical elements such as spectacle lenses and camera lenses because they are lighter and less fragile compared to inorganic lenses.

For example, Japanese Patent Laid-Open No. 60-199016 discloses a method for producing a polyurethane-based plastic lens with a high refractive index by heating a composition obtained by mixing an aliphatic polyisocyanate compound with an aliphatic polythiol compound such as pentaerythritol tetrakis-(thioglycolate) and trimethylolpropane tris-(thioglycolate).

In addition, Japanese Patent Laid-Open No. 63-046213 discloses a method in which a tetrafunctional polythiol compound such as pentaerythritol tetrakis(thioglycolate) and pentaerythritol tetrakis(mercaptopropionate) is used together with a bifunctional polythiol compound having thiol groups in order to increase the degree of crosslinking of the resin (see Japanese Patent Laid-Open No. 63-046213).

On the other hand, these thiourethane-based resins have a high refractive index but tend to be colored. In order to avoid this, International Publication No. WO 2010/067489 proposes a resin cured product in which a phosphorus-containing compound such as triphenylphosphine, tris(1,3-dichloropropan-2-yl) phosphate, triphenyl phosphite, and triphenyl phosphate is used in combination with an aromatic isocyanate and a mercapto group-containing compound (see, for example, International Publication No. WO 2010/067489).

According to the technology described in International Publication No. WO 2010/067489, it is reported that the addition of a phosphorus-containing compound makes the resulting resin have a good color phase. However, according to the findings of the present inventors, in the polymerizable composition for optical materials that comprises a polyisocyanate, a mercapto group-containing compound, and a phosphorus-containing compound as essential components, it was found that, in a particular combination of polymerization components, the viscosity was rapidly increased during preparation, the flowability disappeared, and the composition became gel-like (gelation), and it was found that the composition could not be used for industrial purposes as it was.

The present invention has been made in consideration of the above problems. That is, one aspect of the present invention is to provide a novel method for producing a polymerizable composition for optical materials, in which the occurrence of gelation is suppressed even though an organophosphorus compound is used during the preparation of a polymerizable composition for optical materials of a thiourethane-based resin having a high refractive index and suppressed coloration, and the like.

In addition, another aspect of the present invention is to provide a method for producing a transparent resin and a method for producing a lens base material, in which a transparent resin or lens base material of a thiourethane-based resin with a high refractive index and suppressed coloration can be produced stably with good reproducibility, and the like.

### SUMMARY OF THE INVENTION

As a result of diligent investigations focusing on the mixing conditions during preparation of a polymerizable composition for optical materials of a thiourethane-based resin in order to solve the above problems, the present inventors have found that, even when an organophosphorus compound is used, under certain mixing conditions, the above-mentioned gelation during preparation can be suppressed and a polymerizable composition for optical materials of a thiourethane-based resin with a high refractive index and suppressed coloring can be obtained stably with good reproducibility, thereby leading to the completion of the present invention.

[1] A method for producing a polymerizable composition for optical materials, comprising: a step of providing an organophosphorus compound, a polyisocyanate, a first polythiol, and a second polythiol; and a step of mixing the polyisocyanate and the first and second polythiols in the presence of the organophosphorus compound to obtain a polymerizable composition for optical materials, wherein:
the first polythiol is one or more selected from the group consisting of 4-mercaptomethyl-3,6-dithiaoctane-1,8-dithiol and bis(mercaptomethyl)-3,6,9-trithiaundecane-1,11-dithiol; the second polythiol is one or more selected from the group consisting of pentaerythritol tetrakis(2-mercaptoacetate) and pentaerythritol tetrakis(3-mercaptopropionate); and in the mixing step, the first polythiol and the second polythiol are mixed in advance to prepare a polythiol mixture, and then the polythiol mixture is mixed with the polyisocyanate.

[2] The method for producing a polymerizable composition for optical materials according to [1], wherein the organophosphorus compound is one or more selected from the group consisting of triphenylphosphine, tris(1,3-dichloropropan-2-yl) phosphate, triphenyl phosphite, and triphenyl phosphate.

[3] The method for producing a polymerizable composition for optical materials according to [1] or [2], wherein the polyisocyanate comprises one or more selected from the group consisting of an aromatic polyisocyanate and an aliphatic polyisocyanate.

[4] The method for producing a polymerizable composition for optical materials according to [3], wherein the aromatic polyisocyanate comprises one or more selected from the group consisting of tolylene diisocyanate, diphenylmethane diisocyanate, phenylene diisocyanate, naphthalene diisocyanate, and xylylene diisocyanate.

[5] The method for producing a polymerizable composition for optical materials according to [3] or [4], wherein the aliphatic polyisocyanate comprises one or more selected from the group consisting of dicyclohexylmethane diisocyanate, bis(isocyanatomethyl)cyclohexane, hexamethylene diisocyanate, 2,2-dimethylpentane diisocyanate, 2,2,4-trimethylhexane diisocyanate, 2,4,4-trimethylhexamethylene diisocyanate, butene diisocyanate, 1,3-butadiene-1,4-diisocyanate, 1,5-pentamethylene diisocyanate, 3-isocyanatomethyl-3,5,5-trimethylcyclohexyl isocyanate, 1,6,11-undecane triisocyanate, 1,3,6-hexamethylene triisocyanate, 1,8-diisocyanato-4-isocyanatomethyloctane, bis(isocyanatoethyl) carbonate, bis(isocyanatoethyl) ether, lysine diisocyanatomethyl ester, and lysine triisocyanate.

[6] The method for producing a polymerizable composition for optical materials according to any one of [1] to [5], wherein, in the mixing step, mixing is performed in the presence of a mold release agent.

[7] The method for producing a polymerizable composition for optical materials according to [6], wherein the mold release agent comprises a phosphoric acid ester-based mold release agent.

[8] The method for producing a polymerizable composition for optical materials according to any one of [1] to [7], wherein in the mixing steps, mixing is performed in the absence of a polymerization catalyst.

[9] The method for producing a polymerizable composition for optical materials according to [8], further comprising, after the mixing steps, a step of mixing the polymerization catalyst into the polymerizable composition for optical materials.

[10] A method for producing a transparent resin, comprising: a step of providing an organophosphorus compound, a polyisocyanate, a first polythiol, and a second polythiol; a step of mixing the polyisocyanate and the first and second polythiols in the presence of the organophosphorus compound to obtain a polymerizable composition for optical materials; and a step of polymerizing the polymerizable composition for optical materials to obtain a thiourethane-based transparent resin, wherein: the first polythiol is one or more selected from the group consisting of 4-mercaptomethyl-3,6-dithiaoctane-1,8-dithiol and bis(mercaptomethyl)-3,6,9-trithiaundecane-1,11-dithiol; the second polythiol is one or more selected from the group consisting of pentaerythritol tetrakis(2-mercaptoacetate) and pentaerythritol tetrakis(3-mercaptopropionate); and in the mixing step, the first polythiol and the second polythiol are mixed in advance to prepare a polythiol mixture, and then the polythiol mixture is mixed with the polyisocyanate.

[11] A method for producing a lens base material, comprising: a step of providing an organophosphorus compound, a polyisocyanate, a first polythiol, and a second polythiol; a step of mixing the polyisocyanate and the first and second polythiols in the presence of the organophosphorus compound to obtain a polymerizable composition for optical materials; and a step of subjecting the polymerizable composition for optical materials to cast polymerization to obtain a thiourethane-based lens base material, wherein: the first polythiol is one or more selected from the group consisting of 4-mercaptomethyl-3,6-dithiaoctane-1,8-dithiol and bis(mercaptomethyl)-3,6,9-trithiaundecane-1,11-dithiol; the second polythiol is one or more selected from the group consisting of pentaerythritol tetrakis(2-mercaptoacetate) and pentaerythritol tetrakis(3-mercaptopropionate); and in the mixing step, the first polythiol and the second polythiol are mixed in advance to prepare a polythiol mixture, and then the polythiol mixture is mixed with the polyisocyanate.

Here, it is preferable for the above production method of [10] and production method of [11] to further have the technical features described in any one of the above [2] to [9].

According to one aspect of the present disclosure, a novel method for producing a polymerizable composition for optical materials, in which the occurrence of gelation is suppressed even though an organophosphorus compound is used during the preparation of a polymerizable composition for optical materials of a thiourethane-based resin, can be provided, and as a result, a thiourethane-based transparent resin or lens base material with a high refractive index and suppressed coloration can be produced stably with good reproducibility.

### DETAILED DESCRIPTION OF THE PREFERRED EMBODIMENTS

Hereinafter, an embodiment of the present disclosure (hereinafter, referred to as a "present embodiment") will be described in detail with reference to the drawings as necessary, but the present invention is not limited thereto, and a variety of variations are possible within the range not departing from the gist thereof. Note that, in the present specification, the notation of the numerical range "1 to 100", for example, shall include both the lower limit value of "1" and the upper limit value of "100". The same also applies to the notation of other numerical ranges.

### [Method for producing polymerizable composition for optical materials]

A method for producing a polymerizable composition for optical materials of the present embodiment at least comprises: a step of providing an organophosphorus compound, a polyisocyanate, a first polythiol, and a second polythiol (provision step S1); and a step of mixing the polyisocyanate and the first and second polythiols in the presence of the organophosphorus compound to obtain a polymerizable composition for optical materials (mixing step S2).

According to the findings of the present inventors, in the step of mixing a polyisocyanate and a polythiol in the presence of an organophosphorus compound, it was found that, when a certain polythiol (specifically, pentaerythritol tetrakis(2-mercaptoacetate), pentaerythritol tetrakis(3-mercaptopropionate), or the like) was used, the viscosity was rapidly increased, the flowability disappeared, and a gel was generated.

From further investigations, it was found that, when a polyisocyanate and a certain polythiol (specifically, 4-mercaptomethyl-3,6-dithiaoctane-1,8-dithiol, bis(mercaptomethyl)-3,6,9-trithiaundecane-1,11-dithiol, or the like) were mixed in the presence of an organophosphorus compound, such a gelation phenomenon did not occur and a polymerizable composition for optical materials of a thiourethane-based resin with a high refractive index and suppressed coloration could be obtained stably with good reproducibility. It is presumed that the organophosphorus compounds used to suppress the coloration of thiourethane-based resins act as catalysts under certain conditions and cause gelation. And furthermore, it was found that, even in the case of a certain polythiol that causes gelation when mixed with a polyisocyanate as it is in the presence of an organophosphorus compound, if a mixing method is employed, in which the above certain polythiol is mixed with another certain polythiol that does not cause gelation in the presence of an organophosphorus compound in advance, and then that polythiol mixture is mixed with a polyisocyanate (two-step mixing), gelation does not occur. From the above, a novel method for producing a polymerizable composition for optical materials, in which the occurrence of gelation is suppressed even though an organophosphorus compound is used, can be provided, and a thiourethane-based transparent resin or lens base material with a high refractive index and suppressed coloration can be produced stably with good reproducibility. Note that, in the present invention and the present specification, the term "thiourethane-based resin" means a resin having thiourethane bonds formed by the reaction (thiourethanization reaction) between the isocyanate groups that the polyisocyanate has and the thiol groups that the polythiol has. Hereinafter, each configuration will be described in detail.

### <Provision step Sl>

In this provision step S1, an organophosphorus compound, a polyisocyanate, a first polythiol, and a second polythiol are provided. Note that some of the compounds that can be used as components of the polymerizable composition for optical materials have two or more isomers. For such compounds, a mixture of two or more isomers may be used, or one of the two or more isomers may be used alone.

### (Organophosphorus compound)

The organophosphorus compound is a compound that contains phosphorus in the molecule and suppresses the coloration of thiourethane-based resins. Any of the publicly known organophosphorus compounds can be used without particular restrictions, as long as they can be used for fabricating transparent resins, lens base materials, and the like of thiourethane-based resins.

Specific examples of the organophosphorus compound include, but are not particularly limited to, triphenylphosphine, sodium diphenylphosphinobenzene-3-sulfonate, dimethylaminophenyldiphenylphosphine, diphenylphosphinobenzoic acid, tris(methoxyphenyl)phosphine, tris(methylphenyl)phosphine, tris(dimethoxyphenyl)phosphine, tris(dimethylphenyl)phosphine, tris(trimethoxyphenyl)phosphine, tris(trimethylphenyl)phosphine, tris(pentafluorophenyl)phosphine, and triphenylphosphine oxide. These organophosphorus compounds may be used alone as one kind, or may be used in an arbitrary combination of two or more kinds.

Among organophosphorus compounds, from the viewpoint of transparency of the resulting cured product, as well as ease of availability of materials and cost, triphenylphosphine, tris(1,3-dichloropropan-2-yl) phosphate, triphenyl phosphite, and triphenyl phosphate are preferable, and triphenylphosphine is more preferable.

### (Polyisocyanate)

The polyisocyanate is a polyfunctional isocyanate having two or more isocyanate groups (-NCO) in one molecule. The number of isocyanate groups that the polyisocyanate has is two or more, preferably two to four, and more preferably two or three in one molecule. Isocyanate may also be referred to as isocyanato. For the polyisocyanate, any of the publicly known ones can be used without particular restrictions, as long as they can be used for fabricating transparent resins, lens base materials, and the like.

The polyisocyanate can be an aromatic polyisocyanate, linear or branched, or alicyclic aliphatic polyisocyanate, heterocyclic polyisocyanate, or the like, having two or more isocyanate groups (-NCO) in one molecule. These polyisocyanates may be used alone as one kind, or may be used in an arbitrary combination of two or more kinds.

Specific examples of the aromatic polyisocyanate include, but are not particularly limited to, the following:
aromatic polyisocyanates such as 1,2-diisocyanatobenzene, 1,3-diisocyanatobenzene, 1,4-diisocyanatobenzene, 2,4-diisocyanatotoluene, ethylphenylene diisocyanate, isopropylphenylene diisocyanate, dimethylphenylene diisocyanate, diethylphenylene diisocyanate, diisopropylphenylene diisocyanate, trimethylbenzene triisocyanate, benzene triisocyanate, biphenyl diisocyanate, toluidine diisocyanate, 4,4'-methylenebis(phenylisocyanate), 4,4'-methylenebis(2-methylphenylisocyanate), bibenzyl-4,4'-diisocyanate, and bis(isocyanatophenyl)ethylene;

polyisocyanates having an aromatic compound such as xylylene diisocyanate, bis(isocyanatoethyl)benzene, bis(isocyanatopropyl)benzene, α,α,α',α'-tetramethylxylylene diisocyanate, bis(isocyanatobutyl)benzene, bis(isocyanatomethyl)naphthalin, and bis(isocyanatomethylphenyl) ether;

aromatic sulfide-based polyisocyanates such as 2-isocyanatophenyl-4-isocyanatophenyl sulfide, bis(4-isocyanatophenyl) sulfide, and bis(4-isocyanatomethylphenyl) sulfide; and

aromatic disulfide-based isocyanates such as bis(4-isocyanatophenyl) disulfide, bis(2-methyl-5-isocyanatophenyl) disulfide, bis(3-methyl-5-isocyanatophenyl) disulfide, bis(3-methyl-6-isocyanatophenyl) disulfide, bis(4-methyl-5-isocyanatophenyl) disulfide, bis(3-methoxy-4-isocyanatophenyl) disulfide, and bis(4-methoxy-3-isocyanatophenyl) disulfide. These aromatic polyisocyanates may be used alone as one kind, or may be used in an arbitrary combination of two or more kinds.

Among aromatic polyisocyanates, from the viewpoints of heat resistance and transparency of the resulting cured product, as well as ease of availability of materials and cost, tolylene diisocyanate (TDI), diphenylmethane diisocyanate (MDI), phenylene diisocyanate (PDI), naphthalene diisocyanate (NDI), and xylylene diisocyanate (XDI) are preferable. Tolylene diisocyanate (TDI) and diphenylmethane diisocyanate (MDI) are more preferable, and tolylene diisocyanate (TDI) is still more preferable.

Note that, as the aromatic polyisocyanate, halogen substituted products such as chlorine substituted products and bromine substituted products, alkyl substituted products, alkoxy substituted products, nitro substituted products, prepolymer-type modified products with polyhydric alcohols, carbodiimide modified products, urea modified products, biuret modified products, dimerized reaction products, or trimerized reaction products of the above-mentioned exemplary compounds can be used as well. These compounds may be used alone as one kind, or may be used in an arbitrary combination of two or more kinds.

Specific examples of the linear or branched, or alicyclic aliphatic polyisocyanate include, but are not particularly limited to, hexamethylene diisocyanate, 1,5-pentane diisocyanate, 2,2-dimethylpentane diisocyanate, 2,2,4-trimethylhexane diisocyanate, butene diisocyanate, 1,3-butadiene-1,4-diisocyanate, 2,4,4-trimethylhexamethylene diisocyanate, 1,6,11-undecane triisocyanate, 1,3,6-hexamethylene triisocyanate, 1,8-diisocyanato-4-isocyanatomethyloctane, bis(isocyanatoethyl) carbonate, bis(isocyanatoethyl) ether, lysine diisocyanatomethyl ester, and lysine triisocyanate. These linear or branched, or alicyclic aliphatic polyisocyanates may be used alone as one kind, or may be used in an arbitrary combination of two or more kinds.

Specific examples of the alicyclic polyisocyanate include, but are not particularly limited to, bis(4-isocyanatocyclohexyl)methane, 1,3-bis(isocyanatomethyl)cyclohexane, 1,4-bis(isocyanatomethyl)cyclohexane, diisocyanatocyclohexane, isophorone diisocyanate, bis(isocyanatomethyl)cyclohexane, dicyclohexylmethane diisocyanate, 2,5-bis(isocyanatomethyl)-bicyclo[2.2.1]heptane, and 2,6-bis(isocyanatomethyl)-bicyclo[2.2.1]heptane. These alicyclic polyisocyanates may be used alone as one kind, or may be used in an arbitrary combination of two or more kinds.

Specific examples of the heterocyclic polyisocyanates include, but are not particularly limited to, sulfur-containing alicyclic polyisocyanates such as isocyanatomethyl-2-methyl-1,3-dithiolane; 4,5-diisocyanato-1,3-dithiolane, 4,5-bis(isocyanatomethyl)-1,3-dithiolane, and 4,5-bis(isocyanatomethyl)-2-methyl-1,3-dithiolane; and the like. These heterocyclic polyisocyanates may be used alone as one kind, or may be used in an arbitrary combination of two or more kinds.

Among non-aromatic polyisocyanates, aliphatic polyisocyanates are preferable. Dicyclohexylmethane diisocyanate, bis(isocyanatomethyl)cyclohexane, hexamethylene diisocyanate, 2,2-dimethylpentane diisocyanate, 2,2,4-trimethylhexane diisocyanate, 2,4,4-trimethylhexamethylene diisocyanate, butene diisocyanate, 1,3-butadiene-1,4-diisocyanate, 1,5-pentamethylene diisocyanate, 3-isocyanatomethyl-3,5,5-trimethylcyclohexyl isocyanate, 1,6,11-undecane triisocyanate, 1,3,6-hexamethylene triisocyanate, 1,8-diisocyanato-4-isocyanatomethyloctane, bis(isocyanatoethyl) carbonate, bis(isocyanatoethyl) ether, lysine diisocyanatomethyl ester, and lysine triisocyanate are preferable, and dicyclohexylmethane diisocyanate, bis(isocyanatomethyl)cyclohexane, and hexamethylene diisocyanate are more preferable.

Note that, as the above-mentioned non-aromatic polyisocyanate, halogen substituted products such as chlorine substituted products and bromine substituted products, alkyl substituted products, alkoxy substituted products, nitro substituted products, prepolymer-type modified products with polyhydric alcohols, carbodiimide modified products, urea modified products, biuret modified products, dimerized reaction products, or trimerized reaction products of the above-mentioned exemplary compounds can be used as well. These compounds may be used alone as one kind, or may be used in an arbitrary combination of two or more kinds.

### (First polythiol)

The first polythiol is a polyfunctional thiol having two or more mercapto groups (-SH) in one molecule. In the present embodiment, one or more selected from the group consisting of 4-mercaptomethyl-3,6-dithiaoctane-1,8-dithiol and bis(mercaptomethyl)-3,6,9-trithiaundecane-1,11-dithiol are used as the first polythiol. Note that bis(mercaptomethyl)-3,6,9-trithiaundecane-1,11-dithiol may also be referred to as "bis(mercaptomethyl)-3,6,9-trithia-1,11-undecanedithiol", and can be one isomer selected from the group consisting of 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol, or a mixture of two or three of these isomers.

### (Second polythiol)

The second polythiol is a polyfunctional thiol having two or more mercapto groups (-SH) in one molecule. In the present embodiment, one or more selected from the group consisting of pentaerythritol tetrakis(2-mercaptoacetate) (PETMA) and pentaerythritol tetrakis(3-mercaptopropionate) (PETMP) are used as the second polythiol.

### (Additional polythiol)

Note that, in the method for producing a polymerizable composition for optical materials of the present embodiment, only the above first and second polythiols may be used as the polythiol component, but a polythiol other than the above-mentioned first and second polythiols (hereinafter, this may be simply referred to as an "additional polythiol") may be further used to the extent that the effects of the present invention are not impaired. In one aspect, the additional polythiol can be an aliphatic compound. Also, in one aspect, the additional polythiol can be an ester bond-containing compound. For example, the additional ester bond-containing polythiol can include two or more, for example, two to five ester bonds in one molecule. In one aspect, the additional polythiol can be an ester bond-containing aliphatic compound. Among additional polythiols, from the viewpoint of increasing the polymerization density (crosslinking density), polythiols having three mercapto groups in one molecule, polythiols having four mercapto groups in one molecule, and polythiols having five mercapto groups in one molecule are preferable.

Specific examples of the additional polythiol include the following:
aliphatic polythiols such as 1,2-ethanedithiol, 1,1-propanedithiol, 1,2-propanedithiol, 1,3-propanedithiol, 2,2-propanedithiol, 1,6-hexanedithiol, 1,2,3-propanetrithiol, tetrakis(mercaptomethyl)methane, 1,1-cyclohexanedithiol, 1,2-cyclohexanedithiol, 2,2-dimethylpropane-1,3-dithiol, 3,4-dimethoxybutane-1,2-dithiol, 2-methylcyclohexane-2,3-dithiol, 1,1-bis(mercaptomethyl)cyclohexane, thiomalic acid bis(2-mercaptoethyl ester), 2,3-dimercaptosuccinic acid (2-mercaptoethyl ester), 2,3-dimercapto-1-propanol (2-mercaptoacetate), 2,3-dimercapto-1-propanol (3-mercaptoacetate), diethylene glycol bis(2-mercaptoacetate), diethylene glycol bis(3-mercaptopropionate), 1,2-dimercaptopropyl methyl ether, 2,3-dimercaptopropyl methyl ether, 2,2-bis(mercaptomethyl)-1,3-propanedithiol, bis(2-mercaptoethyl) ether, ethylene glycol bis(2-mercaptoacetate), ethylene glycol bis(3-mercaptopropionate), trimethylolpropane tris(2-mercaptoacetate), and trimethylolpropane tris(3-mercaptopropionate);
aromatic polythiols such as 1,2-dimercaptobenzene, 1,3-dimercaptobenzene, 1,4-dimercaptobenzene, 1,2-bis(mercaptomethyl)benzene, 1,3-bis(mercaptomethyl)benzene, 1,4-bis(mercaptomethyl)benzene, 1,3-bis(mercaptoethyl)benzene, 1,4-bis(mercaptoethyl)benzene, 1,2-bis(mercaptomethoxy)benzene, 1,3-bis(mercaptomethoxy)benzene, 1,4-bis(mercaptomethoxy)benzene, 1,2-bis(mercaptoethoxy)benzene, 1,3-bis(mercaptoethoxy)benzene, 1,4-bis(mercaptoethoxy)benzene, 1,2,3-trimercaptobenzene, 1,2,4-trimercaptobenzene, 1,3,5-trimercaptobenzene, 1,2,3-tris(mercaptomethyl)benzene, 1,2,4-tris(mercaptomethyl)benzene, 1,3,5-tris(mercaptomethyl)benzene, 1,2,3-tris(mercaptoethyl)benzene, 1,2,4-tris(mercaptoethyl)benzene, 1,3,5-tris(mercaptoethyl)benzene, 1,2,3-tris(mercaptomethoxy)benzene, 1,2,4-tris(mercaptomethoxy)benzene, 1,3,5-tris(mercaptomethoxy)benzene, 1,2,3-tris(mercaptoethoxy)benzene, 1,2,4-tris(mercaptoethoxy)benzene, 1,3,5-tris(mercaptoethoxy)benzene, 1,2,3,4-tetramercaptobenzene, 1,2,3,5-tetramercaptobenzene, 1,2,4,5-tetramercaptobenzene, 1,2,3,4-tetrakis(mercaptomethyl)benzene, 1,2,3,5-tetrakis(mercaptomethyl)benzene, 1,2,4,5-tetrakis(mercaptomethyl)benzene, 1,2,3,4-tetrakis(mercaptoethyl)benzene, 1,2,3,5-tetrakis(mercaptoethyl)benzene, 1,2,4,5-tetrakis(mercaptoethyl)benzene, 1,2,3,4-tetrakis(mercaptoethyl)benzene, 1,2,3,5-tetrakis(mercaptomethoxy)benzene, 1,2,4,5-tetrakis(mercaptomethoxy)benzene, 1,2,3,4-tetrakis(mercaptoethoxy)benzene, 1,2,3,5-tetrakis(mercaptoethoxy)benzene, 1,2,4,5-tetrakis(mercaptoethoxy)benzene, 2,2'-dimercaptobiphenyl, 4,4'-dimercaptobiphenyl, 4,4'-dimercaptobibenzyl, 2,5-toluenedithiol, 3,4-toluenedithiol, 1,4-naphthalenedithiol, 1,5-naphthalenedithiol, 2,6-naphthalenedithiol, 2,7-naphthalenedithiol, 2,4-dimethylbenzene-1,3-dithiol, 4,5-dimethylbenzene-1,3-dithiol, 9,10-anthracenedimethanethiol, 1,3-di(p-methoxyphenyl)propane-2,2-dithiol, 1,3-diphenylpropane-2,2-dithiol, phenylmethane-1,1-dithiol, and 2,4-di(p-mercaptophenyl)pentane;
halogen substituted aromatic polythiols including chlorine substituted products and bromine substituted products such as 2,5-dichlorobenzene-1,3-dithiol, 1,3-di(p-chlorophenyl)propane-2,2-dithiol, 3,4,5-tribromo-1,2-dimercaptobenzene, and 2,3,4,6-tetrachloro-1,5-bis(mercaptomethyl)benzene;
aromatic polythiols containing a sulfur atom other than thiol groups (which may also be referred to as "mercapto groups"), such as 1,2-bis(mercaptomethylthio)benzene, 1,3-bis(mercaptomethylthio)benzene, 1,4-bis(mercaptomethylthio)benzene, 1,2-bis(mercaptoethylthio)benzene, 1,3-bis(mercaptoethylthio)benzene, 1,4-bis(mercaptoethylthio)benzene, 1,2,3-tris(mercaptomethylthio)benzene, 1,2,4-tris(mercaptomethylthio)benzene, 1,3,5-tris(mercaptomethylthio)benzene, 1,2,3-tris(mercaptoethylthio)benzene, 1,2,4-tris(mercaptoethylthio)benzene, 1,3,5-tris(mercaptoethylthio)benzene, 1,2,3,4-tetrakis(mercaptomethylthio)benzene, 1,2,3,5-tetrakis(mercaptomethylthio)benzene, 1,2,4,5-tetrakis(mercaptomethylthio)benzene, 1,2,3,4-tetrakis(mercaptoethylthio)benzene, 1,2,3,5-tetrakis(mercaptoethylthio)benzene, and 1,2,4,5-tetrakis(mercaptoethylthio)benzene, and nucleus alkylated products thereof;
aliphatic polythiols containing a sulfur atom other than thiol groups, such as bis(mercaptomethyl) sulfide, bis(mercaptoethyl) sulfide, bis(mercaptopropyl) sulfide, bis(mercaptomethylthio)methane, bis(2-mercaptoethylthio)methane, bis(3-mercaptopropylthio)methane, 1,2-bis(mercaptomethylthio)ethane, 1,2-bis(2-mercaptoethylthio)ethane, 1,2-bis(3-mercaptopropylthio)ethane, 1,3-bis(mercaptomethylthio)propane, 1,3-bis(2-mercaptoethylthio)propane, 1,3-bis(3-mercaptopropylthio)propane, 1,2-bis(2-mercaptoethylthio)-3-mercaptopropane, 2-mercaptoethylthio-1,3-propanedithiol, 1,2,3-tris(mercaptomethylthio)propane, 1,2,3-tris(2-mercaptoethylthio)propane, 1,2,3-tris(3-mercaptopropylthio) propane, tetrakis(mercaptomethylthiomethyl)methane, tetrakis(2-mercaptoethylthiomethyl)methane, tetrakis(3-mercaptopropylthiomethyl)methane, bis(2,3-dimercaptopropyl) sulfide, 2,5-dimercapto-1,4-dithiane, bis(mercaptomethyl) disulfide, bis(mercaptoethyl) disulfide, and bis(mercaptopropyl) disulfide, and thioglycolic acid and mercaptopropionic acid esters thereof, hydroxymethyl sulfide bis(2-mercaptoacetate), hydroxymethyl sulfide bis(3-mercaptopropionate), hydroxyethyl sulfide bis(2-mercaptoacetate), hydroxyethyl sulfide bis(3-mercaptopropionate), hydroxypropyl sulfide bis(2-mercaptoacetate), hydroxypropyl sulfide bis(3-mercaptopropionate), hydroxymethyl disulfide bis(2-mercaptoacetate), hydroxymethyl disulfide bis(3-mercaptopropionate), hydroxyethyl disulfide bis(2-mercaptoacetate), hydroxyethyl disulfide bis(3-mercaptopropionate), hydroxypropyl disulfide bis(2-mercaptoacetate), hydroxypropyl disulfide bis(3-mercaptopropionate), 2-mercaptoethyl ether bis(2-mercaptoacetate), 2-mercaptoethyl ether bis(3-mercaptopropionate), 1,4-dithiane-2,5-diol bis(2-mercaptoacetate), 1,4-dithiane-2,5-diol bis(3-mercaptopropionate), thioglycolic acid (2-mercaptoethyl ester), thiodipropionic acid bis(2-mercaptoethyl ester), 4,4'-thiodibutyric acid bis(2-mercaptoethyl ester), dithiodiglycolic acid bis(2-mercaptoethyl ester), dithiodipropionic acid bis(2-mercaptoethyl ester), 4,4'-dithiodibutyric acid bis(2-mercaptoethyl ester), thiodiglycolic acid bis(2,3-dimercaptopropyl ester), thiodipropionic acid bis(2,3-dimercaptopropyl ester), dithiodiglycolic acid bis(2,3-dimercaptopropyl ester), dithiodipropionic acid bis(2,3-dimercaptopropyl ester), and bis(1,3-dimercapto-2-propyl) sulfide; and
heterocycle-containing polythiols containing a sulfur atom other than thiol groups, such as 3,4-thiophenedithiol, tetrahydrothiophene-2,5-dimercaptomethyl, 2,5-dimercapto-1,3,4-thiadiazole, and 2,5-dimercapto-1,4-dithiane. These additional polythiols may be used alone as one kind, or may be used in an arbitrary combination of two or more kinds.

The amount of polyisocyanate to be used can be set as appropriate depending on the desired performance and is not particularly limited, but it is preferably 30 to 70% by mass in total, more preferably 40 to 65% by mass in total, and still more preferably 45 to 60% by mass in total, relative to the total solid content of the polymerizable composition for optical materials. Also, in the case where an aromatic polyisocyanate and one or more aliphatic polyisocyanates are used in combination as the polyisocyanate, although their proportion to be used is not particularly limited, it is preferably 1:9 to 9:1, more preferably 2:8 to 8:2, and still more preferably 3:7 to 7:3.

The amount of first and second polythiols to be used can be set as appropriate depending on the desired performance and is not particularly limited, but it is preferably 30 to 70% by mass in total, more preferably 35 to 60% by mass in total, and still more preferably 40 to 55% by mass in total, relative to the total solid content of the polymerizable composition for optical materials. In addition, although the proportion between first polythiol and second polythiol to be used is not particularly limited, it is preferably 1:9 to 9:1, more preferably 2:8 to 8:2, and still more preferably 3:7 to 7:3.

Here, the polymerizable composition for optical materials of the present embodiment contains mercapto groups and isocyanate groups derived from the polyisocyanate, the first and second polythiols, and the like. At this time, the -SH/-NCO equivalent ratio of the polymerizable composition for optical materials of the present embodiment may be set as appropriate depending on the desired performance in consideration of the types of and compounding proportion between the polyisocyanate and polythiols to be used, and is not particularly limited. However, it is preferably 0.50 to 1.50, more preferably 0.70 to 1.30, still more preferably 0.80 to 1.20, and particularly preferably 0.90 to 1.10.

### (Other components)

In addition to the above-mentioned essential components, the organophosphorus compound, the polyisocyanate, and the first and second polythiols, the polymerizable composition for optical materials of the present embodiment may contain various additive agents publicly known in the art as necessary. Examples of the additive agents include, but are not particularly limited to, ultraviolet absorbers, polymerization catalysts, mold release agents, antioxidants, coloration inhibitors, fluorescent brightening agents, bluing agents, chain extenders, crosslinking agents, photostabilizers, oil-soluble dyes, and fillers. By mixing the above additive agents by normal methods, the desired curable composition can be obtained. The amount of additive agents to be used can be set as appropriate.

### (Ultraviolet absorber)

The ultraviolet absorber preferably has a maximum absorption wavelength of 345 nm or more in the chloroform solution. As for the ultraviolet absorber, those publicly known in the art can be used, and their types are not particularly limited. Specific examples thereof include, but are not particularly limited to, benzophenone-based compounds such as 2,4-dihydroxybenzophenone, 2-hydroxy-4-methoxybenzophenone, 2-hydroxy-4-methoxybenzophenone-5-sulfonic acid, 2-hydroxy-4-n-octoxybenzophenone, 2-hydroxy-4-n-dodecyloxybenzophenone, 2-hydroxy-4-benzyloxybenzophenone, and 2,2'-dihydroxy-4-methoxybenzophenone; benzotriazole-based compounds such as 2-(2-hydroxy-5-methylphenyl)-2H-benzotriazole, 2-(2-hydroxy-3,5-di-tert-butylphenyl)-5-chloro-2H-benzotriazole, 2-(2-hydroxy-3-tert-butyl-5-methylphenyl)-5-chloro-2H-benzotriazole, 2-(2-hydroxy-3,5-di-tert-amylphenyl)-2H-benzotriazole, 2-(2-hydroxy-3,5-di-tert-butylphenyl)-2H-benzotriazole, 2-(2-hydroxy-5-tert-butylphenyl)-2H-benzotriazole, 2-(2-hydroxy-5-tert-octylphenyl)-2H-benzotriazole, and 2-(2-hydroxy-4-octyloxyphenyl)-2H-benzotriazole; dibenzoylmethane, 4-tert-butyl-4'-methoxybenzoylmethane, and the like. These ultraviolet absorbers may be used alone as one kind, or may be used in an arbitrary combination of two or more kinds.

The amount of ultraviolet absorber to be added is preferably 0.01 parts by mass or more and 5 parts by mass or less, more preferably 0.05 parts by mass or more and 3 parts by mass or less, still more preferably 0.1 parts by mass or more and 2 parts by mass or less, particularly preferably 0.3 parts by mass or more and 2 parts by mass or less, even further preferably 0.5 parts by mass or more and 2 parts by mass or less, and most preferably 0.8 parts by mass or more and 2 parts by mass or less relative to 100 parts by mass of the total amount of resin components (that is, the polyisocyanate and the first and second polythiols, and furthermore, an optional component, additional polythiol). Note that, in the present invention and the present specification, the mass of resin components refers to, when the polymerizable composition for optical materials contains a solvent, the mass of the polymerizable composition excluding that of the solvent.

### (Polymerization catalyst)

The polymerization catalyst catalyzes the thiourethanization reaction between the polyisocyanate and the first and second polythiols (furthermore, an optional component, additional polythiol). As for the polymerization catalyst that catalyzes the thiourethanization reaction, those publicly known in the art can be used, and their types are not particularly limited. The polymerization catalyst is preferably an organotin compound. Specific examples thereof include, but are not particularly limited to, alkyltin halide compounds such as dibutyltin dichloride, dimethyltin dichloride, monomethyltin trichloride, trimethyltin chloride, tributyltin chloride, tributyltin fluoride, and dimethyltin dibromide; and alkyltin compounds such as dibutyltin diacetate and dibutyltin dilaurate. These polymerization catalysts may be used alone as one kind, or may be used in an arbitrary combination of two or more kinds. Among the above, dibutyltin dichloride, dimethyltin dichloride, dibutyltin diacetate, and dibutyltin dilaurate are preferable. Although the timing of introducing the polymerization catalyst is not particularly limited, from the viewpoint of suppressing the occurrence of unintended gelation in the mixing step S2, it is preferable that the polymerization catalyst should not be introduced upon adding the first and second polythiols to the polyisocyanate (in the absence of the polymerization catalyst), and thereafter, the polymerization catalyst should be introduced.

The amount of polymerization catalyst to be added is preferably 0.001 parts by mass or more and 1 part by mass or less, more preferably 0.005 parts by mass or more and 0.5 parts by mass or less, and still more preferably 0.005 parts by mass or more and 0.1 parts by mass or less relative to 100 parts by mass of the total amount of resin components (that is, the polyisocyanate and the first and second polythiols, and furthermore, an optional component, additional polythiol).

### (Mold release agent)

The mold release agent enhances the releasing properties from the molding mold. As for the mold release agent, those publicly known in the art can be used, and their types are not particularly limited. The mold release agent is preferably a silicone-based compound such as modified silicone oil or a phosphoric acid ester compound, and is more preferably a phosphoric acid ester compound. Specific examples of the phosphoric acid ester compound include, but are not particularly limited to, isopropyl acid phosphate, butyl acid phosphate, octyl acid phosphate, nonyl acid phosphate, decyl acid phosphate, isodecyl acid phosphate, isodecyl acid phosphate, tridecyl acid phosphate, stearyl acid phosphate, propylphenyl acid phosphate, butylphenyl acid phosphate, and butoxyethyl acid phosphate. The phosphoric acid ester compound may be either phosphoric acid monoester compound or phosphoric acid diester compound, but a mixture of phosphoric acid monoester compound and phosphoric acid diester compound is preferable. The timing of introducing the mold release agent is not particularly limited. In one aspect, introduction of the mold release agent is not performed upon adding the first and second polythiols to the polyisocyanate (in the absence of the mold release agent), and then the mold release agent may be introduced. Alternatively, in one aspect, since the presence of mold release agent in the mixture enhances the suppression of gelation in the mixing step S2, it is preferable to introduce the mold release agent upon adding the first and second polythiols to the polyisocyanate (in the presence of the mold release agent).

The amount of mold release agent to be added is preferably 0.01 parts by mass or more and 1.00 parts by mass or less, and more preferably 0.05 parts by mass or more and 0.50 parts by mass or less relative to 100 parts by mass of the total amount of resin components (that is, the polyisocyanate and the first and second polythiols, and furthermore, an optional component, additional polythiol).

### <Mixing step S2>

The polymerizable composition for optical materials of the present embodiment can be prepared by mixing the above polyisocyanate and the above first and second polythiols in the presence of the above organophosphorus compound. In this mixing step S2, as mentioned above, by carrying out two-step mixing in which the first polythiol and the second polythiol are mixed in advance to prepare a polythiol mixture, and then this polythiol mixture is mixed with the polyisocyanate, the occurrence of gelation phenomenon during preparation is suppressed and a polymerizable composition for optical materials with a high refractive index and suppressed coloration is obtained.

The method for preparing the polymerizable composition for optical materials is not particularly limited, and any method publicly known as a method for preparing a polymerizable composition can be employed as appropriate. For example, upon preparing the polymerizable composition for optical materials of the present embodiment, it may be prepared without adding any solvent, or may be prepared by adding an arbitrary amount of solvent. As the solvent, one or more of the solvents publicly known as solvents that can be used for polymerizable compositions can be used.

### [Transparent resin]

A transparent resin of the present embodiment can be obtained by polymerizing the above-mentioned polymerizable composition for optical materials. Since the transparent resin of the present embodiment is obtained by the above-mentioned method by preparing the polymerizable composition for optical materials, the occurrence of gelation during preparation of the polymerizable composition for optical materials is suppressed, and as a result, the transparent resin can be obtained stably. And since the thiourethane-based resin formed of the organophosphorus compound, the polyisocyanate, and the polythiols is used, the transparent resin obtained by polymerizing it has a high refractive index and suppressed coloration.

The method for producing the transparent resin of the present embodiment is not particularly limited, and any method publicly known as a method for producing a transparent resin can be employed as appropriate. In one aspect, the method for producing the transparent resin of the present embodiment comprises a step of polymerizing the above-mentioned polymerizable composition for optical materials.

The transparent resin obtained after the polymerization step has a comparatively high refractive index and suppressed coloration, and is lighter and less fragile compared to inorganic lenses, and it is easier to obtain ones having even better heat resistance, durability, and impact resistance. For this reason, the transparent resin of the present embodiment can be suitably used as various optical members. Examples of the optical members may include various lenses and optical elements such as spectacle lenses, telescope lenses, binocular lenses, microscope lenses, endoscope lenses, and imaging system lenses of various cameras, and more preferably, examples thereof include spectacle lenses. Note that the term "lens" in the present invention and the present specification shall include "lens base materials" in which one or more layers are laminated in an arbitrary manner. And, the term "for optical materials" in the present invention and the present specification is meant to include these optical members.

For example, in order to produce a cured product with a lens shape (also referred to as a "lens base material" or "plastic lens"), cast polymerization is preferable. In the cast polymerization, for example, the polymerizable composition for optical materials prepared as described above is injected into a cavity of a molding mold having two molds facing each other with a certain interval and a cavity formed by closing the above interval, from an inlet provided on the side of the molding mold after defoaming as necessary. By polymerizing the polymerizable composition for optical materials in this cavity, preferably by heating (curing reaction), a cured product can be obtained to which the internal shape of the cavity is transferred. For the molding mold, for example, a molding mold made of glass or metal is used. The polymerization conditions upon polymerizing the polymerizable composition for optical materials in the molding mold are not particularly limited, and can be set as appropriate depending on the composition and the like of the polymerizable composition for optical materials to be used. As one example, a molding mold in which the polymerizable composition for optical materials has been injected into the cavity can be subjected to heat treatment under conditions of preferably 0°C or higher and 150°C or lower, more preferably 10°C or higher and 130°C or lower, and for preferably 3 hours or longer and 50 hours or shorter, more preferably 5 hours or longer and 25 hours or shorter. However, the conditions are not limited to the above. Note that, in the present invention and the present specification, the temperature regarding cast polymerization, such as heating temperature, refers to the ambient temperature at which the molding mold is placed. Also, during heating, the temperature can be raised at an arbitrary temperature raising rate and can be lowered (cooled) at an arbitrary temperature lowering rate. After the polymerization (curing reaction) ends, the cured product inside the cavity is released from the molding mold. In order to make the transparent resin fabricated by polymerizing the polymerizable composition for optical materials have good release properties from the molding mold, a mold release agent may be applied to the mold release surface of the molding mold, or a mold release agent may be added to the polymerizable composition for optical materials.

The cured product that has been released from the molding mold can be used as an optical member after carrying out post treatment as necessary, and for example, it can be used as various lenses (for example, lens base materials). As one example, the cured product used as the lens base material for spectacle lenses can be normally subjected to, after being released from the mold, post processing such as annealing, dyeing treatment, grinding such as rounding, polishing, and processing for forming a coat layer such as a primer coat layer to improve impact resistance and a hard coat layer to increase surface hardness. Furthermore, various functional layers such as antireflection layers and water repellent layers can be formed on the lens base material. For any of these processing steps, publicly known technologies can be applied. For example, in the dyeing treatment, the lens base material can be dyed with any color such as blue, red, green, or yellow. The transparent resin (for example, lens base material) of the present embodiment has a high visual transmittance and exhibits excellent color development properties even when dyed with these colors. In this way, a spectacle lens in which the lens base material is the above cured product can be obtained. Furthermore, by attaching this spectacle lens to a frame, glasses can be obtained.

According to the present embodiment, two-step mixing is employed, in which the first polythiol and the second polythiol are mixed in advance in the presence of the organophosphorus compound to prepare a polythiol mixture, and then this polythiol mixture is mixed with the polyisocyanate, and thus, the occurrence of gelation phenomenon during preparation is suppressed. As a result, high-performance polymerizable composition for optical materials of a thiourethane-based resin can be obtained stably. Therefore, by using this polymerizable composition for optical materials, it becomes possible to stably produce a transparent resin or lens base material of a thiourethane-based resin with a high refractive index and suppressed coloration with good reproducibility.

### Examples

Hereinafter, the present embodiment will be described more specifically with reference to Examples and Comparative Examples, but the present invention is not restricted in any way to these Examples. The present invention can adopt a variety of conditions as long as they do not depart from the gist of the present invention and achieve the objects of the present invention. Note that the values of the various production conditions and evaluation results shown below have the meaning as the preferred upper limit value or preferred lower limit value in the implementation of the present invention, and the preferred range may be the range specified by the combination of the aforementioned upper limit or lower limit values and the values of the following Examples or the combination of the values among Examples. In addition, the operations and evaluations described below were performed under room temperature (about 20 to 25°C) in the atmosphere, unless otherwise noted. Also, % and part(s) described below are on the basis of mass unless otherwise noted.

### [Measurement methods and evaluation criteria]

The measurement conditions and evaluation criteria for the presence or absence of coloration, refractive index, and transparency in the plastic lenses of Examples and Comparative Examples are as follows.

### <Presence or absence of coloration in polymerizable composition>

The coloration of each polymerizable composition was visually observed.

### <Refractive index>

The refractive indices of the plastic lenses were measured at 20°C using a KPR-2000 type precision refractometer manufactured by Kalnew Optical Industrial Co., Ltd. for light at the wavelength of the D line (689.6 nm). In one aspect, the refractive index is preferably 1.59 or more and 1.61 or less. Also, in another aspect, the refractive index is preferably 1.62 or more and 1.68 or less, and more preferably 1.65 or more and 1.68 or less.

### <Transparency>

By visually observing the obtained plastic lenses in the dark under fluorescent light, the transparency of the plastic lenses was evaluated using the following three levels. Note that plastic lenses with an evaluation result of VG or G have no practical problem in terms of transparency. On the other hand, plastic lenses with an evaluation result of B are not appropriate for practical use.

VG (Very Good): No cloudiness or opaque material deposition.

G (Good): Slight cloudiness and/or deposition of opaque material observed.

B (Bad): Severe degree of cloudiness or obvious deposition of opaque material.

### (Example 1)

To a 2 L flask, 339.0 g of 4,4'-diphenylmethane diisocyanate (MDI), 1.80 g of triphenylphosphine (TPP), and 6.00 g of 2-(2-hydroxy-4-octyloxyphenyl)-2-H-benzotriazole as the UV absorber were charged, and dissolved by stirring for 30 minutes under nitrogen purge at room temperature. Then, 261.0 g of a polythiol mixture (prepared by mixing 130.5 g of pentaerythritol tetrakis(2-mercaptoacetate) (PETMA) and 130.5 g of 1,2-bis[(2-mercaptoethyl)thio]-3-mercaptopropane homogeneously in advance) was added, and then, 0.6 g of butoxyethyl acid phosphate as the internal mold release agent and 0.09 g of dimethyltin dichloride as the polymerization catalyst were further added. Thereafter, the pressure was reduced to 0.13 kPa (1.0 Torr) and stirring under reduced pressure was carried out as is for 20 minutes to completely disperse or dissolve them to form a homogeneous solution, thereby preparing a polymerizable composition for optical materials of Example 1. The resulting polymerizable composition for optical materials of Example 1 was colorless and transparent, and there was no extreme increase in the viscosity of the solution or disappearance of flowability observed.

This polymerizable composition for optical materials of Example 1 was injected into a lens mold through a 1.0 µm polytetrafluoroethylene membrane filter, and cast polymerization was carried out for 24 hours in a temperature program from an initial temperature of 25°C to a final temperature of 120°C, thereby fabricating a transparent resin (plastic lens) of Example 1 that was colorless and transparent with a central wall thickness of 1.8 mm. After the obtained plastic lens of Example 1 was released from the molding mold, various measurements and evaluations were carried out and the results were as follows.
Refractive index: 1.67
Transparency: VG

### (Example 2)

To a 2 L flask, 339.0 g of 4,4'-diphenylmethane diisocyanate (MDI), 1.80 g of triphenylphosphine (TPP), and 6.00 g of 2-(2-hydroxy-4-octyloxyphenyl)-2-H-benzotriazole as the UV absorber were charged, and dissolved by stirring for 30 minutes under nitrogen purge at room temperature. Then, 261.0 g of a polythiol mixture (prepared by mixing 130.5 g of pentaerythritol tetrakis(2-mercaptoacetate) (PETMA) and 130.5 g of bis(mercaptomethyl)-3,6,9-trithiaundecane-1,11-dithiol homogeneously in advance) was added, and then, 0.6 g of butoxyethyl acid phosphate as the internal mold release agent and 0.09 g of dimethyltin dichloride as the polymerization catalyst were further added. Thereafter, the pressure was reduced to 0.13 kPa (1.0 Torr) and stirring under reduced pressure was carried out as is for 20 minutes to completely disperse or dissolve them to form a homogeneous solution, thereby preparing a polymerizable composition for optical materials of Example 1. The resulting polymerizable composition for optical materials of Example 2 was colorless and transparent, and there was no extreme increase in the viscosity of the solution or disappearance of flowability observed.

This polymerizable composition for optical materials of Example 2 was injected into a lens mold through a 1.0 µm polytetrafluoroethylene membrane filter, and cast polymerization was carried out for 24 hours in a temperature program from an initial temperature of 25°C to a final temperature of 120°C, thereby fabricating a transparent resin (plastic lens) of Example 2 that was colorless and transparent with a central wall thickness of 1.8 mm. After the obtained plastic lens of Example 2 was released from the molding mold, various measurements and evaluations were carried out and the results were as follows.
Refractive index: 1.67
Transparency: VG

### (Comparative Example 1)

To a 2 L flask, 339.0 g of 4,4'-diphenylmethane diisocyanate (MDI), 1.80 g of triphenylphosphine (TPP), and 6.00 g of 2-(2-hydroxy-4-octyloxyphenyl)-2-H-benzotriazole (trade name: SB-707R, Shipro Kasei Kaisha Ltd.) as the UV absorber were charged, and dissolved by stirring at room temperature for 30 minutes. Then, upon adding 130.5 g of pentaerythritol tetrakis(2-mercaptoacetate) (PETMA) with stirring, the viscosity of the solution was extremely increased and the solution turned into gel-like, and the flowability disappeared.

In conclusion, each of the aforementioned aspects will be summarized.

According to one aspect, provided is a method for producing a polymerizable composition for optical materials, comprising: a step of providing an organophosphorus compound, a polyisocyanate, a first polythiol, and a second polythiol; and a step of mixing the polyisocyanate and the first and second polythiols in the presence of the organophosphorus compound to obtain a polymerizable composition for optical materials, wherein: the first polythiol is one or more selected from the group consisting of 4-mercaptomethyl-3,6-dithiaoctane-1,8-dithiol and bis(mercaptomethyl)-3,6,9-trithiaundecane-1,11-dithiol; the second polythiol is one or more selected from the group consisting of pentaerythritol tetrakis(2-mercaptoacetate) and pentaerythritol tetrakis(3-mercaptopropionate); and in the mixing step, the first polythiol and the second polythiol are mixed in advance to prepare a polythiol mixture, and then the polythiol mixture is mixed with the polyisocyanate.

According to the above production method, two-step mixing is employed, in which the first polythiol and the second polythiol are mixed in advance in the presence of the organophosphorus compound to prepare a polythiol mixture, and then this polythiol mixture is mixed with the polyisocyanate, and thus, the occurrence of gelation phenomenon during preparation is suppressed. As a result, high-performance polymerizable composition for optical materials of a thiourethane-based resin can be obtained stably. Therefore, by using this polymerizable composition for optical materials, it becomes possible to stably produce a transparent resin or lens base material of a thiourethane-based resin with a high refractive index and suppressed coloration with good reproducibility.

In one aspect, the above organophosphorus compound can be one or more selected from the group consisting of triphenylphosphine, tris(1,3-dichloropropan-2-yl) phosphate, triphenyl phosphite, and triphenyl phosphate.

In one aspect, the above polyisocyanate can be one or more selected from the group consisting of an aromatic polyisocyanate and an aliphatic polyisocyanate.

In one aspect, the above aromatic polyisocyanate can be one or more selected from the group consisting of tolylene diisocyanate, diphenylmethane diisocyanate, phenylene diisocyanate, naphthalene diisocyanate, and xylylene diisocyanate.

In one aspect, the above aliphatic polyisocyanate can be one or more selected from the group consisting of dicyclohexylmethane diisocyanate, bis(isocyanatomethyl)cyclohexane, hexamethylene diisocyanate, 2,2-dimethylpentane diisocyanate, 2,2,4-trimethylhexane diisocyanate, 2,4,4-trimethylhexamethylene diisocyanate, butene diisocyanate, 1,3-butadiene-1,4-diisocyanate, 1,5-pentamethylene diisocyanate, 3-isocyanatomethyl-3,5,5-trimethylcyclohexyl isocyanate, 1,6,11-undecane triisocyanate, 1,3,6-hexamethylene triisocyanate, 1,8-diisocyanato-4-isocyanatomethyloctane, bis(isocyanatoethyl) carbonate, bis(isocyanatoethyl) ether, lysine diisocyanatomethyl ester, and lysine triisocyanate.

In one aspect, in the above mixing step, mixing can be performed in the presence of a mold release agent.

In one aspect, the above mold release agent can comprise a phosphoric acid ester-based mold release agent.

In one aspect, in the above mixing steps, mixing can be performed in the absence of a polymerization catalyst.

In one aspect, the method can further comprise, after the above mixing steps, a step of mixing the polymerization catalyst into the polymerizable composition for optical materials.

In one aspect, provided is a method for producing a transparent resin, comprising: a step of providing an organophosphorus compound, a polyisocyanate, a first polythiol, and a second polythiol; a step of mixing the polyisocyanate and the first and second polythiols in the presence of the organophosphorus compound to obtain a polymerizable composition for optical materials; and a step of polymerizing the polymerizable composition for optical materials to obtain a thiourethane-based transparent resin, wherein: the first polythiol is one or more selected from the group consisting of 4-mercaptomethyl-3,6-dithiaoctane-1,8-dithiol and bis(mercaptomethyl)-3,6,9-trithiaundecane-1,11-dithiol; the second polythiol is one or more selected from the group consisting of pentaerythritol tetrakis(2-mercaptoacetate) and pentaerythritol tetrakis(3-mercaptopropionate); and in the mixing step, the first polythiol and the second polythiol are mixed in advance to prepare a polythiol mixture, and then the polythiol mixture is mixed with the polyisocyanate.

In one aspect, provided is a method for producing a lens base material, comprising: a step of providing an organophosphorus compound, a polyisocyanate, a first polythiol, and a second polythiol; a step of mixing the polyisocyanate and the first and second polythiols in the presence of the organophosphorus compound to obtain a polymerizable composition for optical materials; and a step of subjecting the polymerizable composition for optical materials to cast polymerization to obtain a thiourethane-based lens base material, wherein: the first polythiol is one or more selected from the group consisting of 4-mercaptomethyl-3,6-dithiaoctane-1,8-dithiol and bis(mercaptomethyl)-3,6,9-trithiaundecane-1,11-dithiol; the second polythiol is one or more selected from the group consisting of pentaerythritol tetrakis(2-mercaptoacetate) and pentaerythritol tetrakis(3-mercaptopropionate); and in the mixing step, the first polythiol and the second polythiol are mixed in advance to prepare a polythiol mixture, and then the polythiol mixture is mixed with the polyisocyanate.

In one aspect, the above optical members or optical materials can be lenses.

In one aspect, the above lenses can be spectacle lenses or lens base materials.

The embodiments disclosed here should be considered merely illustrative and not restrictive in all respects. The scope of the present invention is presented by the claims rather than the description given above, and it is intended that all modifications within the meaning and scope equivalent to the claims be included. For example, two or more of the various aspects described in the present specification can be combined in an arbitrary combination.

One aspect of the present invention is useful in the field of production of various optical members such as spectacle lenses and lens base materials.

## Claims

1. A method for producing a polymerizable composition for optical materials, comprising:
a step of providing an organophosphorus compound, a polyisocyanate, a first polythiol, and a second polythiol; and
a step of mixing the polyisocyanate and the first and second polythiols in the presence of the organophosphorus compound to obtain a polymerizable composition for optical materials, wherein:
the first polythiol is one or more selected from the group consisting of 4-mercaptomethyl-3,6-dithiaoctane-1,8-dithiol and bis(mercaptomethyl)-3,6,9-trithiaundecane-1,11-dithiol;
the second polythiol is one or more selected from the group consisting of pentaerythritol tetrakis(2-mercaptoacetate) and pentaerythritol tetrakis(3-mercaptopropionate); and
in the mixing step, the first polythiol and the second polythiol are mixed in advance to prepare a polythiol mixture, and then the polythiol mixture is mixed with the polyisocyanate.

2. The method for producing a polymerizable composition for optical materials according to claim 1, wherein
the organophosphorus compound is one or more selected from the group consisting of triphenylphosphine, tris(1,3-dichloropropan-2-yl) phosphate, triphenyl phosphite, and triphenyl phosphate.

3. The method for producing a polymerizable composition for optical materials according to claim 1 or 2, wherein
the polyisocyanate comprises one or more selected from the group consisting of an aromatic polyisocyanate and an aliphatic polyisocyanate.

4. The method for producing a polymerizable composition for optical materials according to claim 3, wherein
the aromatic polyisocyanate comprises one or more selected from the group consisting of tolylene diisocyanate, diphenylmethane diisocyanate, phenylene diisocyanate, naphthalene diisocyanate, and xylylene diisocyanate.

5. The method for producing a polymerizable composition for optical materials according to claim 3 or 4, wherein
the aliphatic polyisocyanate comprises one or more selected from the group consisting of dicyclohexylmethane diisocyanate, bis(isocyanatomethyl)cyclohexane, hexamethylene diisocyanate, 2,2-dimethylpentane diisocyanate, 2,2,4-trimethylhexane diisocyanate, 2,4,4-trimethylhexamethylene diisocyanate, butene diisocyanate, 1,3-butadiene-1,4-diisocyanate, 1,5-pentamethylene diisocyanate, 3-isocyanatomethyl-3,5,5-trimethylcyclohexyl isocyanate, 1,6,11-undecane triisocyanate, 1,3,6-hexamethylene triisocyanate, 1,8-diisocyanato-4-isocyanatomethyloctane, bis(isocyanatoethyl) carbonate, bis(isocyanatoethyl) ether, lysine diisocyanatomethyl ester, and lysine triisocyanate.

6. The method for producing a polymerizable composition for optical materials according to any one of claims 1 to 5, wherein
in the mixing step, mixing is performed in the presence of a mold release agent.

7. The method for producing a polymerizable composition for optical materials according to claim 6, wherein
the mold release agent comprises a phosphoric acid ester-based mold release agent.

8. The method for producing a polymerizable composition for optical materials according to any one of claims 1 to 7, wherein
in the mixing steps, mixing is performed in the absence of a polymerization catalyst.

9. The method for producing a polymerizable composition for optical materials according to claim 8, further comprising,
after the mixing steps, a step of mixing the polymerization catalyst into the polymerizable composition for optical materials.

10. A method for producing a transparent resin, comprising:
a step of providing an organophosphorus compound, a polyisocyanate, a first polythiol, and a second polythiol;
a step of mixing the polyisocyanate and the first and second polythiols in the presence of the organophosphorus compound to obtain a polymerizable composition for optical materials; and
a step of polymerizing the polymerizable composition for optical materials to obtain a thiourethane-based transparent resin, wherein:
the first polythiol is one or more selected from the group consisting of 4-mercaptomethyl-3,6-dithiaoctane-1,8-dithiol and bis(mercaptomethyl)-3,6,9-trithiaundecane-1,11-dithiol;
the second polythiol is one or more selected from the group consisting of pentaerythritol tetrakis(2-mercaptoacetate) and pentaerythritol tetrakis(3-mercaptopropionate); and
in the mixing step, the first polythiol and the second polythiol are mixed in advance to prepare a polythiol mixture, and then the polythiol mixture is mixed with the polyisocyanate.

11. A method for producing a lens base material, comprising:
a step of providing an organophosphorus compound, a polyisocyanate, a first polythiol, and a second polythiol;
a step of mixing the polyisocyanate and the first and second polythiols in the presence of the organophosphorus compound to obtain a polymerizable composition for optical materials; and
a step of subjecting the polymerizable composition for optical materials to cast polymerization to obtain a thiourethane-based lens base material, wherein:
the first polythiol is one or more selected from the group consisting of 4-mercaptomethyl-3,6-dithiaoctane-1,8-dithiol and bis(mercaptomethyl)-3,6,9-trithiaundecane-1,11-dithiol;
the second polythiol is one or more selected from the group consisting of pentaerythritol tetrakis(2-mercaptoacetate) and pentaerythritol tetrakis(3-mercaptopropionate); and
in the mixing step, the first polythiol and the second polythiol are mixed in advance to prepare a polythiol mixture, and then the polythiol mixture is mixed with the polyisocyanate.
